# EUROPEAN PATENT SPECIFICATION

(11) **EP 2 975 232 B1**
(45) Date of publication and mention of the grant of the patent: **26.10.2016**
(21) Application number: 15176910.6
(22) Date of filing: 15.07.2015
(51) Int. Cl.: F01N 3/10, B01D 46/00, B01D 53/00, B01J 35/00, B01J 37/00, F01N 3/20, F01N 3/28, F01N 3/021, F01N 3/022, F01N 3/035

(54) **EXHAUST PURIFICATION SYSTEM FOR INTERNAL COMBUSTION ENGINE**
ABGASREINIGUNGSSYSTEM FÜR VERBRENNUNGSMOTOR
SYSTEME DE PURIFICATION D'ECHAPPEMENT POUR MOTEUR A COMBUSTION INTERNE

(30) Priority: 15.07.2014 JP 2014145234
(43) Date of publication of application: 20.01.2016
(73) Proprietor: Toyota Jidosha Kabushiki Kaisha, Toyota-shi, Aichi-ken 471-8571 (JP)
(72) Inventor: TSUKAMOTO, Yoshihisa, TOYOTA-SHI, AICHI-KEN, 471-8571 (JP); ITOH, Kazuhiro, TOYOTA-SHI, AICHI-KEN, 471-8571 (JP); NISHIOKA, Hiromasa, TOYOTA-SHI, AICHI-KEN, 471-8571 (JP); IMAI, Daichi, TOYOTA-SHI, AICHI-KEN, 471-8571 (JP); OHTSUKI, Kazuhiro, TOYOTA-SHI, AICHI-KEN, 471-8571 (JP); NOTAKE, Yasumasa, TOYOTA-SHI, AICHI-KEN, 471-8571 (JP)
(74) Representative: Intès, Didier Gérard André

(56) References cited:
- EP-A1- 1 961 933
- EP-A1- 2 095 865
- EP-A1- 2 522 419
- EP-A2- 2 324 904

## Description

### Technical Field

The present invention relates to an exhaust purification system for an internal combustion engine.

### Background Art

Known in the art is a catalytic device which removes exhaust gas which is discharged from an internal combustion engine. The device is provided with alternately arranged exhaust gas inflow passages and exhaust gas outflow passages and porous substrates which separate these exhaust gas inflow passages and exhaust gas outflow passages from each other. The exhaust gas which flows into the exhaust gas inflow passages passes through the substrates to flow out to the inside of the exhaust gas outflow passages. A trap layer which traps the particulate matter is formed on the surfaces of the substrates at the exhaust gas inflow passage sides, a layer of an NOₓ selective reduction catalyst which reduces NOₓ by a reducing agent under an excess of oxygen is formed in the micropores of the substrates, and a layer of an oxidation catalyst is formed on the surfaces of the substrates at the exhaust gas outflow passage sides (for example, see PTL 1). This catalyst device is supplied with urea. Ammonia which is produced from this urea is used as a reducing agent.
Document EP 1 961 933 is also known and discloses a catalytic activated diesel particle filter with ammonia trap effect.

### Citations List

### Patent Literature

PTL 1: Japanese Patent Publication No. 2012-237282A

### Summary of Invention

### Technical Problem

In PTL 1, the particulate matter is trapped by the trap layer. However, this trap layer does not carry an oxidation catalyst. Further, the layer of oxidation catalyst which is formed on the surfaces of the substrates at the exhaust gas outflow passage sides is separated from the trap layer. As a result, there is the problem that the particulate matter which is trapped at the trap layer is difficult to remove by oxidation. If the trap layer carries an oxidation catalyst, this problem might be able to be resolved. However, in this case, before the reducing agent reaches the NOₓ selective reduction catalyst, it is oxidized or consumed by the oxidation catalyst of the trap layer, and therefore NOₓ is liable to be unable to be reduced well.

### Solution to Problem

According to the present invention, there is provided an exhaust purification system for an internal combustion engine, in which a particulate filter for trapping particulate matter which is contained in exhaust gas is arranged inside an engine exhaust passage, the particulate filter being provided with alternately arranged exhaust gas inflow passages and exhaust gas outflow passages and porous partition walls which separate these exhaust gas inflow passages and exhaust gas outflow passages from each other, and exhaust gas which flows into the exhaust gas inflow passages passing through the partition walls and flowing out into the exhaust gas outflow passages, characterized in that the particulate filter further has a layer of an NOₓ selective reduction catalyst with a ratio of passage of particulate matter higher than a predetermined first ratio of passage and a layer of an oxidation catalyst with a ratio of passage of particulate matter lower than the first ratio of passage, and that, on surfaces of the partition walls at sides of the exhaust gas inflow passages, the layer of the oxidation catalyst is arranged at the downstream side in the flow direction of exhaust gas from the exhaust gas inflow passages through the partition walls to the exhaust gas outflow passages and the layer of the NOₓ selective reduction catalyst is arranged at the upstream side.

Preferably, the ratio of passage of particulate matter of the layer of the oxidation catalyst is substantially the same as a ratio of passage of particulate matter of the partition walls.

Preferably, the ratio of passage of particulate matter of the layer of the NOX selective reduction catalyst is higher than a second ratio of passage which is higher than the first ratio of passage.

Preferably, the exhaust purification system is provided with an addition valve which supplies a reducing agent or reducing agent-generating substance to the particulate filter, and the NOX selective reduction catalyst uses the reducing agent which is supplied from the addition valve to reduce NOX or generates a reducing agent from the reducing agent-generating substance which is supplied from the addition valve and reduces NOX by the reducing agent.

Preferably, the reducing agent-generating substance is comprised of an ammonia-generating compound and the NOₓ selective reduction catalyst is comprised of a catalyst which reduces NOₓ in exhaust gas by ammonia in an excess of oxygen and which has the function of storing at least part of the ammonia-generating compound which is supplied to the catalyst inside the catalyst and generating ammonia from the ammonia-generating compound which is stored in the catalyst to reduce NOₓ in the exhaust gas by the ammonia.

Preferably, the particulate filter further has a layer of another NOₓ selective reduction catalyst which is different from the layer of the NOₓ selective reduction catalyst, the layer of the other NOₓ selective reduction catalyst is arranged at a downstream side of the layer of the oxidation catalyst, and an NOₓ reduction window of the other NOₓ selective reduction catalyst is located at a low temperature side from an NOₓ reduction window of the NOₓ selective reduction catalyst and is located at a low temperature side from a reducing agent oxidation window of the oxidation catalyst.

Preferably, the layer of the other NOₓ selective reduction catalyst is arranged between the layer of the oxidation catalyst and the surfaces of the partition walls at the sides of the exhaust gas inflow passages.

Preferably, a ratio of passage of particulate matter of the layer of the other NOₓ selective reduction catalyst is lower than the first ratio of passage.

Preferably, a micropore diameter of the layer of the other NOₓ selective reduction catalyst is 20 µm or less.

Preferably, a micropore diameter of the layer of the NOₓ selective reduction catalyst is 40 µm or more.

Preferably, a micropore diameter of the layer of the oxidation catalyst is 20 µm or less.

### Advantageous Effects of Invention

It is possible to reduce NOₓ well while removing particulate matter by oxidation well.

### Brief Description of Drawings

FIG. 1 is an overall view of an internal combustion engine.
FIG. 2A is a front view of a particulate filter.
FIG. 2B is a side cross-sectional view of a particulate filter.
FIG. 3 is a partial enlarged cross-sectional view of a partition wall of a particulate filter.
FIG. 4 is a graph which explains a relationship between a micropore diameter and a ratio of passage of particulate matter.
FIG. 5 is a partial enlarged cross-sectional view of a partition wall which explains an embodiment according to the present invention.
FIG. 6 is a partial enlarged cross-sectional view of a partition wall which explains a second embodiment according to the present invention.
FIG. 7 is a graph which explains an NOₓ reduction window of an NOₓ selective reduction catalyst, an NOₓ reduction window of another NOₓ reduction catalyst, and a reducing agent oxidation window of an oxidation catalyst.

### Description of Embodiments

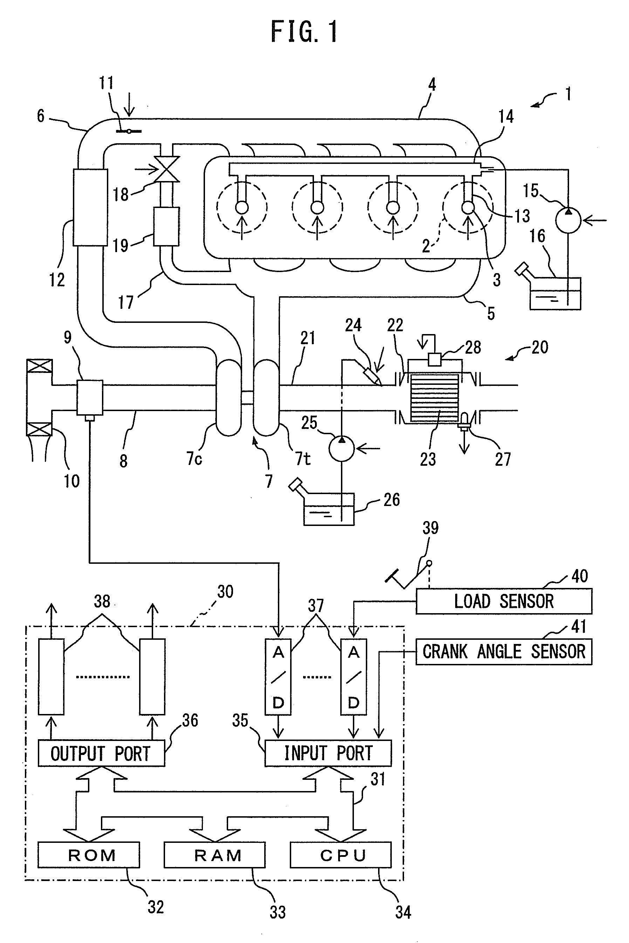

Referring to FIG. 1, 1 indicates a body of a compression spark ignition type internal combustion engine, 2 a combustion chamber of each cylinder, 3 an electromagnetically controlled fuel injector for injecting fuel into a combustion chamber 2, 4 an intake manifold, and 5 an exhaust manifold. The intake manifold 4 is connected through an intake duct 6 to an outlet of a compressor 7c of an exhaust turbocharger 7, while an inlet of the compressor 7c is successively connected through an intake introduction pipe 8 to an air flowmeter 9 and an air cleaner 10. Inside the intake duct 6, an electrically controlled throttle valve 11 is arranged. Furthermore, around the intake duct 6, a cooling device 12 is arranged for cooling the intake air which flows through the inside of the intake duct 6. On the other hand, the exhaust manifold 5 is connected to an inlet of an exhaust turbine 7t of the exhaust turbocharger 7, while an outlet of the exhaust turbine 7t is connected to an exhaust post-treatment device 20.

Each fuel injector 3 is connected through a fuel runner 13 to a common rail 14. This common rail 14 is connected through an electrically controlled variable discharge fuel pump 15 to a fuel tank 15. The fuel inside the fuel tank 16 is supplied by the fuel pump 15 to the inside of the common rail 14. Fuel which is supplied to the inside of the common rail 14 is supplied through each fuel runner 13 to a fuel injector 3. In the embodiment which is shown in FIG. 1, this fuel is diesel oil. In another embodiment which is not shown, the internal combustion engine is comprised of a spark ignition type internal combustion engine at which fuel is burned with a lean air-fuel ratio. In this case, the fuel is comprised of gasoline.

The exhaust manifold 5 and the intake manifold 4 are connected to each other through an exhaust gas recirculation (hereinafter referred to as "EGR") passage 17. Inside the EGR passage 17, an electrically controlled EGR control valve 18 is arranged. Further, around the EGR passage 17, a cooling device 19 is arranged for cooling the EGR gas which flows through the inside of the EGR passage 17.

The exhaust post-treatment device 20 is provided with an exhaust pipe 21 which is connected to the outlet of the exhaust turbine 7t. This exhaust pipe 21 is connected to a casing 22. In the casing 22, a particulate filter 23 is arranged for trapping the particulate matter in the exhaust gas. While explained later in detail, the particulate filter 23 is provided with a layer of an oxidation catalyst and a layer of an NOₓ selective reduction catalyst which reduces the NOₓ by a reducing agent under an excess of oxygen. Further, in the exhaust pipe 21 which is positioned upstream of the particulate filter 23, an electromagnetic type addition valve 24 which supplies a reducing agent-generating substance which can generate a reducing agent to a particulate filter 23 is attached. The addition valve 24 is connected through an electric pump 25 to a tank 26. Inside the tank 26, the reducing agent-generating substance is for example stored in the form of a liquid. The reducing agent-generating substance in the tank 26 is supplied by the electric pump 25 to the addition valve 24, then is supplied by the addition valve 24 to the particulate filter 23.

In the embodiment according to the present invention, ammonia is used as the reducing agent, while an ammonia-generating compound which can generate ammonia is used as the reducing agent-generating substance. There are various compounds as compounds which can be used as ammonia-generating compounds. In the embodiment according to the present invention, urea is used as the ammonia-generating compound. In this case, urea is stored in the form of a urea aqueous solution inside the tank 26 and is injected from the addition valve 24. In another embodiment which is not shown, the reducing agent is stored in the tank 26, while a reducing agent is supplied from the addition valve 24. In this case, as the reducing agent, for example, hydrocarbons (fuel) are used.

An electronic control unit 30 is comprised of a digital computer which is provided with components which are connected with each other by a bidirectional bus 31 such as a ROM (read only memory) 32, RAM (random access memory) 33, CPU (microprocessor) 34, input port 35, and output port 36. Downstream of the particulate filter 23 inside the casing 22, a temperature sensor 27 for detecting the temperature of the exhaust gas which flows out from the particulate filter 23 is attached. The temperature of the exhaust gas expresses the temperature of the particulate filter 23. Further, at the casing 22, a differential pressure sensor 28 which detects the differential pressure before and after the particulate filter 23 is attached. The output voltages of the air flowmeter 9, temperature sensor 27, and differential pressure sensor 28 are input through respectively corresponding AD converters 37 to the input port 35. Further, an accelerator pedal 39 is connected to a load sensor 40 which generates an output voltage which is proportional to the amount of depression of the accelerator pedal 39. The output voltage of the load sensor 40 is input through a corresponding AD converter 37 to the input port 35. Furthermore, a crank angle sensor 41 which generates an output pulse each time the crankshaft rotates by for example 30° is connected to the input port 35. At the CPU 34, the output pulse from the crank angle sensor 41 is used as the basis to calculate the engine speed. On the other hand, the output port 36 is connected through corresponding drive circuits 38 to the fuel injectors 3, the drive device of the throttle valve 11, fuel pump 15, EGR control valve 18, addition valve 24, and electric pump 25.

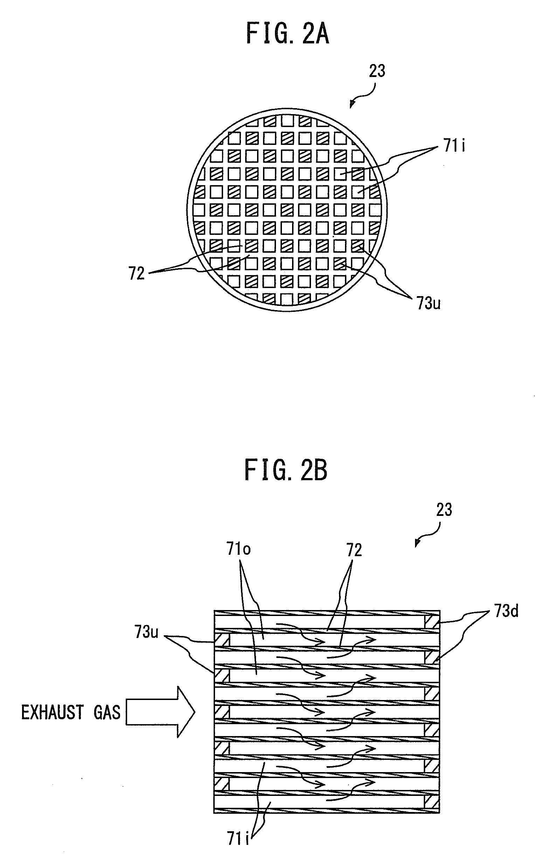

FIG. 2A and FIG. 2B show the structure of a wall flow type particulate filter 23. Note that, FIG. 2A shows a front view of the particulate filter 23, while FIG. 2B shows a side cross-sectional view of the particulate filter 23. As shown in FIG. 2A and FIG. 2B, the particulate filter 23 forms a honeycomb structure which is provided with a plurality of exhaust flow passages 71i, 71o which extend in parallel with each other and partition walls 72 which separate these exhaust flow passages 71i, 71o. In the embodiment which is shown in FIG. 2A, the exhaust flow passages 71i, 71o are comprised of exhaust gas inflow passages 71i which have upstream ends which are opened and have downstream ends which are closed by plugs 73d and exhaust gas outflow passages 71o which have upstream ends which are closed by plugs 73u and have downstream ends which are opened. Note that, in FIG. 2A, the hatched parts show plugs 73u. Therefore, the exhaust gas inflow passages 71i and exhaust gas outflow passages 71o are alternately arranged through thin partition walls 72. In other words, the exhaust gas inflow passages 71i and exhaust gas outflow passages 71o are comprised of exhaust gas inflow passages 71i each of which are surrounded by four exhaust gas outflow passages 71o and of exhaust gas outflow passages 71o each of which are surrounded by four exhaust gas inflow passages 71i.

The partition walls 72 are formed from a porous material such as cordierite, silicon carbide, silicon nitride, zirconia, titania, alumina, silica, mullite, lithium aluminum silicate, zirconium phosphate, and other such ceramics. Therefore, as shown by the arrows in FIG. 2B, the exhaust gas first flows into the exhaust gas inflow passages 71i, then passes through the surrounding partition walls 72 and flows out to the adjoining exhaust gas outflow passages 71o.

In another embodiment which is not shown, the exhaust flow passages are comprised of exhaust gas inflow passages with upstream ends and downstream ends which are opened and exhaust gas outflow passages with upstream ends which are closed by plugs and with downstream ends which are open. In this example as well, part or all of the exhaust gas which flows into the exhaust gas inflow passages 71i passes through the insides of the partition walls 72 and flows out into the exhaust gas outflow passages 71o.

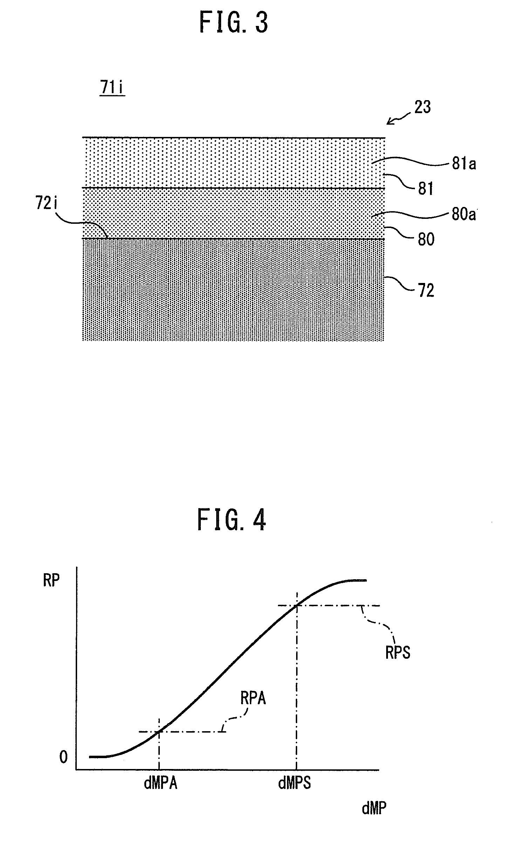

FIG. 3 shows a partial enlarged cross-sectional view of a partition wall 72 of the particulate filter 23. In the example which is shown in FIG. 3, the particulate filter 23 has a layer 80 of an oxidation catalyst 80a and a layer 81 of an NOₓ selective reduction catalyst 81a. On the surface 72i of the partition wall 72 at the exhaust gas inflow passage 71i side, the layer 80 of the oxidation catalyst 80a and the layer 81 of the NOₓ selective reduction catalyst 81a are alternately stacked. In this case, the layer 81 of the NOₓ selective reduction catalyst 81a is arranged at the upstream side in the flow direction of exhaust gas from the exhaust gas inflow passage 71i through the partition wall 72 to the exhaust gas outflow passage 71o, while the layer 80 of the oxidation catalyst 80a is arranged at the downstream side. That is, in the example which is shown in FIG. 3, the layer 80 of the oxidation catalyst 80a is formed on the surface 72i of the partition wall 72 at the exhaust gas inflow passage 71i side, while the layer 81 of the NOₓ selective reduction catalyst 81a is formed on the layer 80 of the oxidation catalyst 80a. In another embodiment, which is not shown, at least one intermediate layer is formed on the layer 80 of the oxidation catalyst 80a, while the layer 81 of the NOₓ selective reduction catalyst 81a is formed on the intermediate layer.

As the oxidation catalyst 80a, various catalysts which have oxidation functions can be used. In the embodiment according to the present invention, as the oxidation catalyst 80a, a catalyst comprised of a carrier made of alumina on which a precious metal such as platinum Pt and an active oxygen-releasing agent which can release active oxygen such as ceria are carried is used. If doing this, the temperature at which the oxidation catalyst 80a can oxidize the particulate matter can be made lower than the peak temperature which the particulate filter 23 reaches during normal engine operation including accelerated operation and decelerated operation. That is, even if not performing temperature raising control for making the temperature of the particulate filter 23 rise, it is possible to remove by oxidation the particulate matter which is trapped on the particulate filter 23 at the time of normal operation. Note that, the temperature raising control can, for example, be performed by burning additional fuel which is added to the exhaust gas which flows into the particulate filter 23 and can be performed by operating an electric heater which is arranged upstream of the particulate filter 23 in the exhaust passage.

On the other hand, as the NOₓ selective reduction catalyst 81a, various catalysts which use the reducing agent which is supplied from the addition valve 24 to reduce the NOₓ or which generate a reducing agent from a reducing agent-generating substance which is supplied from the addition valve 24 and reduce NOₓ by that reducing agent is used. As explained above, in the embodiment according to the present invention, a reducing agent-generating substance is supplied from the addition valve 24, while NOₓ is reduced by the reducing agent which is generated from the reducing agent-generating substance. Further, in the embodiment according to the present invention, urea is used as the reducing agent-generating substance, while ammonia is used as the reducing agent. In this case, as the NOₓ selective reduction catalyst 81a, a catalyst which reduces NOₓ in exhaust gas by ammonia in an excess of oxygen and which has the function of storing at least part of the ammonia-generating compound which is supplied to the catalyst inside the catalyst and generating ammonia from the ammonia-generating compound which is stored in the catalyst to reduce the NOₓ in the exhaust gas by the ammonia is used. Specifically, as the NOₓ selective reduction catalyst 81a, a catalyst comprised of a carrier made of titania TiO₂ on which vanadium oxide V₂O₅ is carried or a catalyst comprised of a carrier made of zeolite ZSM5 on which copper Cu is carried is used.

The layer 80 of the oxidation catalyst 80a and the layer 81 of the NOₓ selective reduction catalyst 81a are respectively formed by coating and therefore have porosity. FIG. 4 shows one example of the relationship between the micropore diameter dMP (average diameter) of a porous member such as a partition wall 72 of the particulate filter 23, the layer 80 of the oxidation catalyst 80a, and the layer 81 of the NOₓ selective reduction catalyst 81a and the ratio of passage RP of particulate matter of the porous member when the amount of exhaust gas which flows into the particulate filter 23 is maintained constant. Here, the ratio of passage RP of the particulate matter expresses the ratio of the amount of particulate matter which flows out from the porous member to the amount of particulate matter which flows into the porous member. As will be understood from FIG. 4, the ratio of passage RP of the particulate matter becomes higher as the micropore diameter dMP of the porous member becomes larger. Further, if the micropore diameter dMP is smaller than the first micropore diameter dMPA, the ratio of passage RP of the particulate matter is lower than a predetermined first ratio of passage RPA, while if the micropore diameter dMP is larger than the first micropore diameter dMPA, the ratio of passage RP of the particulate matter is higher than the first ratio of passage RPA. Furthermore, if the micropore diameter dMP is smaller than the second micropore diameter dMPS (>dMPA), the ratio of passage RP of the particulate matter is lower than the second ratio of passage RPS (>RPA), while if the micropore diameter dMP is larger than the second micropore diameter dMPS, the ratio of passage RP of the particulate matter is higher than the second ratio of passage RPS. Note that, in the embodiment according to the present invention, the micropore diameter (average diameter) means the median diameter (50% diameter) of the distribution of micropore diameters obtained by the mercury penetration method.

In the example which is shown in FIG. 4, the first micropore diameter dMPA is about 25 µm, while the first ratio of passage RPA is 10 percent or so. Further, the second micropore diameter dMPS is about 35 µm, while the second ratio of passage RPS is about 90 percent. That is, if the micropore diameter of the porous member is smaller than the first micropore diameter dMPA, the majority of the particulate matter is trapped by the porous member, while if the micropore diameter of the porous member is larger than the second micropore diameter dMPS, the majority of the particulate matter passes through the porous member.

In the embodiment according to the present invention, the micropore diameter of a partition wall 72 of the particulate filter 23 is smaller than the first micropore diameter dMPA, and therefore, the ratio of passage of particulate matter of the partition wall 72 is lower than the first ratio of passage RPA. Specifically, the micropore diameter of the partition wall 72 is 20 µm or less, preferably 10 to 20 µm or so.

Further, in the embodiment according to the present invention, the micropore diameter of the layer 80 of the oxidation catalyst 80a is substantially the same as the micropore diameter of the partition wall 72. Therefore, the ratio of passage of particulate matter of the layer 80 of the oxidation catalyst 80a is substantially the same as the ratio of passage of particulate matter of the partition wall 72. That is, the micropore diameter of the layer 80 of the oxidation catalyst 80a is smaller than the first micropore diameter dMPA, and therefore the ratio of passage of particulate matter of the layer 80 of the oxidation catalyst 80a is lower than the first ratio of passage RPA. Specifically, the micropore diameter of the layer 80 of the oxidation catalyst 80a is 20 µm or less, preferably 10 to 20 µm or so. In another embodiment, which is not shown, the micropore diameter of the layer 80 of the oxidation catalyst 80a is smaller than the micropore diameter of the partition wall 72. In still another embodiment which is not shown, the micropore diameter of the layer 80 of the oxidation catalyst 80a is larger than the micropore diameter of the partition wall 72 and smaller than the first micropore diameter dMPA. In still another embodiment which is not shown, the micropore diameter of the layer 80 of the oxidation catalyst 80a is larger than the first micropore diameter dMPA.

In the embodiment according to the present invention, furthermore, the micropore diameter of the layer 81 of the NOₓ selective reduction catalyst 81a is larger than the first micropore diameter dMPA, and therefore the ratio of passage of particulate matter of the layer 81 of the NOₓ selective reduction catalyst 81a is higher than the first ratio of passage RPA. In other words, the micropore diameter of the layer 81 of the NOₓ selective reduction catalyst 81a is larger than the micropore diameter of the partition wall 72 and layer 80 of the oxidation catalyst 80a. Therefore, the ratio of passage of particulate matter of the layer 81 of the NOₓ selective reduction catalyst 81a is higher than the ratio of passage of particulate matter of the partition wall 72 and the layer 80 of the oxidation catalyst 80a. In particular, the micropore diameter of the layer 81 of the NOₓ selective reduction catalyst 81a is larger than the second micropore diameter dMPS, therefore, the ratio of passage of particulate matter of the layer 81 of the NOₓ selective reduction catalyst 81a is higher than the second ratio of passage RPS. Specifically, the micropore diameter of the layer 81 of the NOₓ selective reduction catalyst 81a is 40 µm or more, preferably 40 µm or so.

Therefore, generally speaking, the micropore diameter of the partition wall 72 and the layer 80 of the oxidation catalyst 80a is set so that almost no particulate matter can pass through them, while the micropore diameter of the layer 81 of the NOₓ selective reduction catalyst 81a is set so that almost all of the particulate matter can pass through them.

Now then, in the internal combustion engine which is shown in FIG. 1, fuel is burned under an excess of oxygen, so the exhaust gas contains an excess of oxygen. If supplying a urea aqueous solution into exhaust gas containing an excess of oxygen, the NO which is contained in the exhaust gas is reduced on the NOₓ selective reduction catalyst 81a by the ammonia NH₃ which is generated from the urea CO(NH₂)₂ (for example, 2NH₃+2NO+(1/2)O₂→2N₂+3H₂O).

That is, the urea in the supplied urea aqueous solution first deposits on the NOₓ selective reduction catalyst 81a. At this time, if the temperature of the NOₓ selective reduction catalyst 81a is high, for example, about 350°C or more, the urea breaks down due to heat all at once and ammonia is generated.

On the other hand, when the temperature of the NOₓ selective reduction catalyst 81a is substantially 132°C to substantially 350°C, the urea is stored once in the NOₓ selective reduction catalyst 81a, then ammonia is generated and released a little at a time from the urea which is stored in the NOₓ selective reduction catalyst 81a. The generation of ammonia in this case is believed to be due to the urea changing in form on the NOₓ selective reduction catalyst 81a. That is, urea changes to biuret at substantially 132°C, biuret changes to cyanuric acid at substantially 190°C, and cyanuric acid changes to cyanic acid or isocyanic acid at substantially 360°C. Alternatively, as the elapsed time from storage in the NOₓ selective reduction catalyst 81a becomes longer, the urea changes to biuret, the biuret changes to cyanuric acid, and the cyanuric acid changes to cyanic acid or isocyanic acid. It is believed that in the process of change in form, ammonia is generated a little at a time.

When the temperature of the NOₓ selective reduction catalyst 81a is equal to or lower than about 132°C, which is the heat decomposition temperature of urea, if a urea aqueous solution is supplied to the NOₓ selective reduction catalyst 81a, the urea in the urea aqueous solution is stored in the NOₓ selective reduction catalyst 81a. Almost no ammonia is generated from the urea stored at this time. However, after that, for example, if the engine is operated under an acceleration mode and the temperature of the NOₓ selective reduction catalyst 81a becomes higher, ammonia is generated and released from the urea which is stored in the NOₓ selective reduction catalyst 81a a little at a time.

That is, in the NOₓ selective reduction catalyst 81a, the urea breaks down under heat or is stored once in the NOₓ selective reduction catalyst 81a, then changes in form to generate ammonia and NOₓ is reduced by the generated ammonia. In the embodiment according to the present invention, in this way, a urea aqueous solution is supplied from the addition valve 24 so that the amount of ammonia which is generated by the NOₓ selective reduction catalyst 81a substantially matches the amount required for reducing the entire amount of NOₓ which flows into the NOₓ selective reduction catalyst 81a.

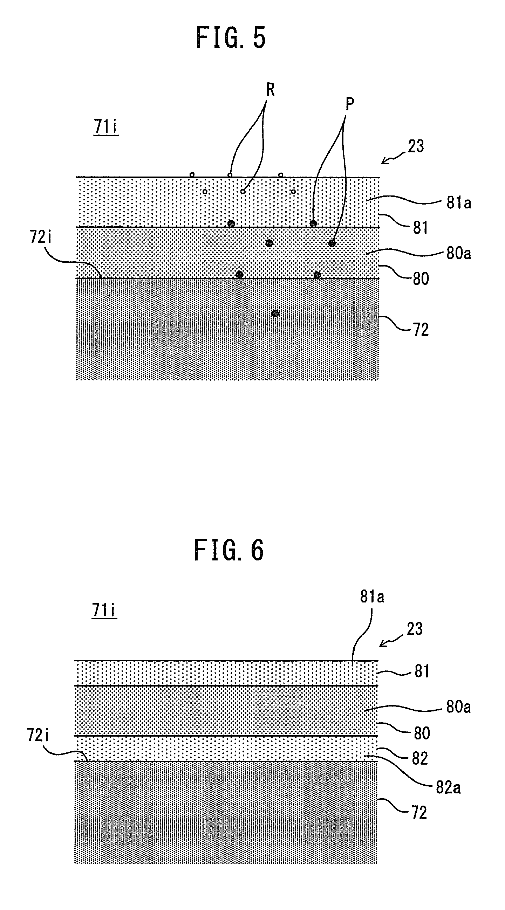

In the embodiment according to the present invention, as explained above, the layer 80 of the oxidation catalyst 80a is arranged downstream of the layer 81 of the NOₓ selective reduction catalyst 81a. As a result, the urea or ammonia which is shown by R in FIG. 5 reliably reaches the NOₓ selective reduction catalyst 81a without being oxidized or consumed by the oxidation catalyst 80a. Therefore, the NOₓ selective reduction catalyst 81a can reliably remove the NOₓ.

On the other hand, the particulate matter which is contained in the exhaust gas is trapped on the particulate filter 23. In the embodiment according to the present invention, as explained above, the micropore diameter of the layer 81 of the NOₓ selective reduction catalyst 81a is set so that almost all of the particulate matter can pass through it. As a result, the majority of the particulate matter which is shown by P in FIG. 5 passes through the layer 81 of the NOₓ selective reduction catalyst 81a. Therefore, the layer 81 of the NOₓ selective reduction catalyst 81a is suppressed from being covered by particulate matter and the reduction action of the NOₓ selective reduction catalyst 81a is suppressed from being obstructed by the particulate matter. That is, if the layer 81 of the NOₓ selective reduction catalyst 81a is covered by particulate matter, it becomes difficult for the urea or ammonia and NOₓ to contact the NOₓ selective reduction catalyst 81a and becomes difficult for the NOₓ to be reduced. In the embodiment according to the present invention, the urea or ammonia and NOₓ can reliably contact the NOₓ selective reduction catalyst 81a.

Further, in the embodiment according to the present invention, as explained above, the micropore diameter of the partition wall 72 and layer 80 of the oxidation catalyst 80a is set so that almost no particulate matter can pass through. As a result, the majority of the particulate matter which is shown by P in FIG. 5 is trapped on the surface of the layer 80 of the oxidation catalyst 80a at the NOₓ selective reduction catalyst 81a side or in the micropores of the oxidation catalyst 80a. Even if the particulate matter passes through the layer 80 of the oxidation catalyst 80a, the particulate matter is trapped on the surface of the partition wall 72 at the oxidation catalyst 80a side or in the micropores of the partition wall 72. Next, when the temperature of the particulate filter 23 rises, the particulate matter is removed by oxidation by the oxidation catalyst 80a. Therefore, the particulate matter is reliably trapped and is reliably removed by oxidation.

FIG. 6 shows a second embodiment according to the present invention. Referring to FIG. 6, the particulate filter 23 is further provided with a layer 82 of another NOₓ selective reduction catalyst 82a which is different from the layer 81 of the NOₓ selective reduction catalyst 81a. As the other NOₓ selective reduction catalyst 82a, in the same way as the NOₓ selective reduction catalyst 81a, a catalyst comprised of a carrier made of titania TiO₂ on which vanadium oxide V₂O₅ is carried or a catalyst comprised of a carrier made of zeolite ZSM5 on which copper Cu is carried is used.

In the embodiment which is shown in FIG. 6, the layer 82 of the other NOₓ selective reduction catalyst 82a is arranged between the layer 80 of the oxidation catalyst 80a and the surface 72i of the partition wall 72 at the exhaust gas inflow passage 71i side. That is, the layer 82 of the other NOₓ selective reduction catalyst 82a is arranged at the downstream side of the layer 80 of the oxidation catalyst 80a and the upstream side of the partition wall 72 in the flow direction of exhaust gas from the exhaust gas inflow passage 71i through the partition wall 72 to the exhaust gas outflow passage 71o. In another embodiment, which is not shown, the layer 82 of the other NOₓ selective reduction catalyst 82a is arranged on the surface of the partition wall 72 at the exhaust gas outflow passage 71o side, that is, the downstream side of the partition wall 72.

The temperature of the oxidation catalyst 80a, the temperature of the NOₓ selective reduction catalyst 81a, the temperature of the other NOₓ selective reduction catalyst 82a, and the temperature of the particulate filter 23 are substantially the same, so if referring to these as the "catalyst temperature", the NOₓ reduction ratio of the NOₓ selective reduction catalyst 81a will vary according to the catalyst temperature. Further, the NOₓ reduction ratio of the other NOₓ selective reduction catalyst 82a also varies in accordance with the catalyst temperature. Note that, the NOₓ reduction ratio is a ratio of the amount of NOₓ which is reduced by the NOₓ selective reduction catalyst 81a or the other NOₓ selective reduction catalyst 82a to the amount of NOₓ which flows into the NOₓ selective reduction catalyst 81a or the other NOₓ selective reduction catalyst 82a. If referring to a range of catalyst temperature where the NOₓ reduction ratio of the NOₓ selective reduction catalyst 81a is higher than a predetermined target NOₓ reduction ratio as a NOₓ reduction window of the NOₓ selective reduction catalyst 81a and a range of catalyst temperature where the NOₓ reduction ratio of the other NOₓ selective reduction catalyst 82a is higher than the target NOₓ reduction ratio as a NOₓ reduction window of the other NOₓ selective reduction catalyst 82a, in the second embodiment according to the present invention, the NOₓ reduction window of the other NOₓ selective reduction catalyst 82a is at the low temperature side from the NOₓ reduction window of the NOₓ selective reduction catalyst 81a.

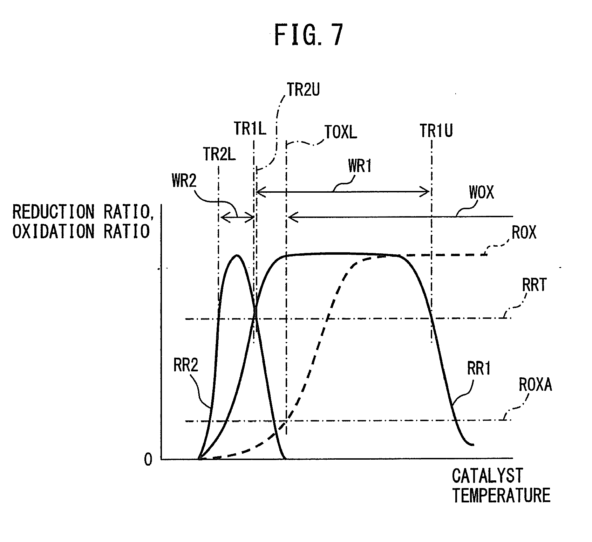

That is, as shown in FIG. 7, the NOₓ reduction ratio RR1 of the NOₓ selective reduction catalyst 81a is higher than the target NOₓ reduction ratio RRT if the catalyst temperature is from the lower limit temperature TR1L to the upper limit temperature TR1U. Therefore, the NOₓ reduction window WR1 of the NOₓ selective reduction catalyst 81a extends from the lower limit temperature TR1L to the upper limit temperature TR1U. On the other hand, the NOₓ reduction ratio RR2 of the other NOₓ selective reduction catalyst 82a is higher than the target NOₓ reduction ratio RRT if the catalyst temperature is from the lower limit temperature TR2L to the upper limit temperature TR2U. Therefore, the NOₓ reduction window WR2 of the other NOₓ selective reduction catalyst 82a extends from the lower limit temperature TR2L to the upper limit temperature TR2U. In this case, the lower limit temperature TR2L of the NOₓ reduction window WR2 of the other NOₓ selective reduction catalyst 82a is lower than the lower limit temperature TR1L of the NOₓ reduction window WR1 of the NOₓ selective reduction catalyst 81a, while the upper limit temperature TR2U of the NOₓ reduction window WR2 of the other NOₓ selective reduction catalyst 82a is lower than the upper limit temperature TR1U of the NOₓ reduction window WR1 of the NOₓ selective reduction catalyst 81a. Therefore, the NOₓ reduction window WR2 of the other NOₓ selective reduction catalyst 82a is at the low temperature side from the NOₓ reduction window WR1 of the NOₓ selective reduction catalyst 81a. Note that, in the example which is shown in FIG. 7, the upper limit temperature TR2U of the NOₓ reduction window WR2 of the other NOₓ selective reduction catalyst 82a is higher than the lower limit temperature TR1L of the NOₓ reduction window WR1 of the NOₓ selective reduction catalyst 81a. In another embodiment, which is not shown, the upper limit temperature TR2U of the NOₓ reduction window WR2 of the other NOₓ selective reduction catalyst 82a is lower than the lower limit temperature TR1L of the NOₓ reduction window WR1 of the NOₓ selective reduction catalyst 81a.

On the other hand, the reducing agent oxidation ratio of the oxidation catalyst 80a also varies in accordance with the catalyst temperature. Note that, a reducing agent oxidation ratio is a ratio of the amount of the reducing agent which is oxidized by the oxidation catalyst 80a to the amount of reducing agent or reducing agent-generating substance which flows into the oxidation catalyst 80a. If a range of catalyst temperature where the reducing agent oxidation ratio of the oxidation catalyst 80a is higher than a predetermined set oxidation ratio is called a reducing agent reduction window of the oxidation catalyst 80a, in the second embodiment according to the present invention, the NOₓ reduction window WR2 of the other NOₓ selective reduction catalyst 82a is at the low temperature side from the reducing agent oxidation window of the oxidation catalyst 80a.

That is, as shown in FIG. 7, the reducing agent oxidation ratio ROX of the oxidation catalyst 80a is higher than a set reducing agent oxidation ratio ROXA if the catalyst temperature is higher than a lower limit temperature TOXL. Therefore, a reducing agent oxidation window WOX of the oxidation catalyst 80a is a temperature range higher than the lower limit temperature TOXL. In this case, the lower limit temperature TR2L of the NOₓ reduction window WR2 of the other NOₓ selective reduction catalyst 82a is lower than the lower limit temperature TOXL of the reducing agent oxidation window WOX of the oxidation catalyst 80a, while the upper limit temperature TR2U of the NOₓ reduction window WR2 of the other NOₓ selective reduction catalyst 82a is lower than the lower limit temperature TOXL of the reducing agent oxidation window WOX of the oxidation catalyst 80a. Therefore, the NOₓ reduction window WR2 of the other NOₓ selective reduction catalyst 82a is at the low temperature side from the reducing agent oxidation window WOX of the oxidation catalyst 80a. Note that, in another embodiment, which is not shown, the upper limit temperature TR2U of the NOₓ reduction window WR2 of the other NOₓ selective reduction catalyst 82a is higher than the lower limit temperature TOXL of the reducing agent oxidation window WOX of the oxidation catalyst 80a.

Further, in the second embodiment according to the present invention, the micropore diameter of the layer 82 of the other NOₓ selective reduction catalyst 82a is substantially the same as the micropore diameter of the layer 80 of the oxidation catalyst 80a. Therefore, the ratio of passage of particulate matter of the other NOₓ selective reduction catalyst 82a is substantially the same as the ratio of passage of particulate matter of the layer 80 of the oxidation catalyst 80a. That is, the micropore diameter of the layer 82 of the other NOₓ selective reduction catalyst 82a is smaller than the first micropore diameter dMPA, and therefore the ratio of passage of particulate matter of the layer 82 of the other NOₓ selective reduction catalyst 82a is lower than the first ratio of passage RPA. Specifically, the micropore diameter of the layer 82 of the other NOₓ selective reduction catalyst 82a is 20 µm or less, preferably 10 to 20 µm or so. In another embodiment, which is not shown, the micropore diameter of the layer 82 of the other NOₓ selective reduction catalyst 82a is larger than the micropore diameter of the layer 80 of the oxidation catalyst 80a, for example, is substantially the same as the micropore diameter of the layer 81 of the NOₓ selective reduction catalyst 81a. In still another embodiment, which is not shown, the micropore diameter of the layer 82 of the other NOₓ selective reduction catalyst 82a is smaller than the micropore diameter of the layer 80 of the oxidation catalyst 80a.

By doing this, even when the catalyst temperature is low, the NOₓ can be reliably reduced. That is, for example, in the NOₓ reduction window WR2 of the other NOₓ selective reduction catalyst 82a, part of the urea or ammonia is not used for reducing the NOₓ in the NOₓ selective reduction catalyst 81a and is not oxidized or consumed at the layer 80 of the oxidation catalyst 80a, therefore reaches the layer 82 of the other NOₓ selective reduction catalyst 82a. Therefore, in the other NOₓ selective reduction catalyst 82a, the NOₓ is reduced well by ammonia.

Further, in the second embodiment according to the present invention, as explained above, the layer 82 of the other NOₓ selective reduction catalyst 82a is provided, so compared with the embodiment which is shown in FIG. 3, the layer 81 of the NOₓ selective reduction catalyst 81a can be made thinner. As a result, the particulate matter can easily reach the layer 80 of the oxidation catalyst 80a.

Further, as explained above, the ratio of passage of particulate matter of the layer 82 of the other NOₓ selective reduction catalyst 82a is lower than the first ratio of passage RPA, so the particulate matter which passes through the layer 80 of the oxidation catalyst 80a can be trapped on the surface of the layer 82 of the other NOₓ selective reduction catalyst 82a at the oxidation catalyst 80a side. Therefore, the particulate matter is more reliably removed by oxidation.

### Reference Signs List

- 1.: engine body
- 21.: exhaust pipe
- 23.: particulate filter
- 24.: addition valve
- 71i.: exhaust gas inflow passages
- 71o.: exhaust gas outflow passages
- 72.: partition wall
- 80.: layer of oxidation catalyst
- 81.: layer of NOₓ selective reduction catalyst
- 82.: layer of other NOₓ selective reduction catalyst

## Claims

1. An exhaust purification system for an internal combustion engine, in which a particulate filter (23) for trapping particulate matter which is contained in exhaust gas is arranged inside an engine exhaust passage (21), said particulate filter (23) being provided with alternately arranged exhaust gas inflow passages (71i) and exhaust gas outflow passages (71o),
wherein said particulate filter (23) further has a layer of an NOₓ selective reduction catalyst (81) and a layer of an oxidation catalyst (80),
and wherein said particulate filter (23) is provided with porous partition walls (72) which separate these exhaust gas inflow passages (71i) and exhaust gas outflow passages (71o) from each other, and exhaust gas which flows into said exhaust gas inflow passages (71i) passing through said partition walls (72) and flowing out into said exhaust gas outflow passages (71o), and wherein on surfaces of said partition walls (72) at sides of said exhaust exhaust gas inflow passages (71i), said layer of the oxidation catalyst (80) is arranged at the downstream side in the flow direction of exhaust gas from said exhaust gas inflow passages (71i) through said partition walls (72) to said exhaust gas outflow passages (71o) and said layer of NOₓ selective reduction catalyst (81) is arranged at the upstream side, **characterized**
**in that** the layer of NOX selective reduction catalyst (81) has a ratio of passage of particulate matter higher than a predetermined first ratio of passage (RPA),
**in that** the layer of oxidation catalyst (80) has a ratio of passage of particulate matter lower than said first ratio of passage (RPA).

2. The exhaust purification system for an internal combustion engine according to claim 1, wherein said ratio of passage of particulate matter of said layer of the oxidation catalyst (80) is substantially the same as a ratio of passage of particulate matter of said partition walls (72).

3. The exhaust purification system for an internal combustion engine according to claim 1 or 2, wherein said ratio of passage of particulate matter of said layer of the NOₓ selective reduction catalyst (81) is higher than a second ratio of passage (RPS) which is higher than said first ratio of passage (RPA).

4. The exhaust purification system for an internal combustion engine according to any one of claims 1 to 3, wherein said exhaust purification system is provided with an addition valve (24) which supplies a reducing agent or reducing agent-generating substance to said particulate filter (23), and said NOₓ selective reduction catalyst (81) uses said reducing agent which is supplied from said addition valve (24) to reduce NOₓ or generates a reducing agent from said reducing agent-generating substance which is supplied from said addition valve (24) and reduces NOₓ by said reducing agent.

5. The exhaust purification system for an internal combustion engine according to claim 4, wherein said reducing agent-generating substance is comprised of an ammonia-generating compound and wherein said NOₓ selective reduction catalyst (81) is comprised of a catalyst which reduces NOₓ in exhaust gas by ammonia in an excess of oxygen and which has the function of storing at least part of the ammonia-generating compound which is supplied to said catalyst inside said catalyst and generating ammonia from the ammonia-generating compound which is stored in said catalyst to reduce NOₓ in the exhaust gas by said ammonia.

6. The exhaust purification system for an internal combustion engine according to any one of claims 1 to 5, wherein said particulate filter (23) further has a layer of another NOₓ selective reduction catalyst (82) which is different from said layer of the NOₓ selective reduction catalyst (81), wherein said layer of the other NOₓ selective reduction catalyst (82) is arranged at a downstream side of said layer of the oxidation catalyst (81), and wherein an NOₓ reduction window (WR2) of said other NOₓ selective reduction catalyst (82) is located at a low temperature side from an NOₓ reduction window (WR1) of said NOₓ selective reduction catalyst (81) and is located at a low temperature side from a reducing agent oxidation window (WOX) of said oxidation catalyst (80).

7. The exhaust purification system for an internal combustion engine according to claim 6, wherein said layer of the other NOₓ selective reduction catalyst (82) is arranged between said layer of the oxidation catalyst (80) and the surfaces (72i) of said partition walls (72) at the sides of said exhaust gas inflow passages (71i).

8. The exhaust purification system of an internal combustion engine according to claim 7, wherein a ratio of passage of particulate matter of said layer of the other NOₓ selective reduction catalyst (82) is lower than said first ratio of passage (RPA).

9. The exhaust purification system for an internal combustion engine according to claim 8, wherein a micropore diameter of said layer of the other NOₓ selective reduction catalyst (82) is 20 µm or less.

10. The exhaust purification system for an internal combustion engine according to any one of claims 1 to 9, wherein a micropore diameter of said layer of the NOₓ selective reduction catalyst (81) is 40 µm or more.

11. The exhaust purification system of an internal combustion engine according to any one of claims 1 to 10, wherein a micropore diameter of said layer of the oxidation catalyst (80) is 20 µm or less.

## Patentansprüche

1. Abgasreinigungssystem für eine Brennkraftmaschine, in dem ein Partikelfilter (23) zum Einfangen von partikulärem Material, das im Abgas enthalten ist, innerhalb eines Motorabgaskanals (21) angeordnet ist, wobei der Partikelfilter (23) mit abwechselnd angeordneten Abgaseinströmkanälen (71 i) und Abgasausströmkanälen (71o) bereitgestellt ist,
wobei der Partikelfilter (23) ferner eine Schicht eines Katalysators zur selektiven NOₓ-Reduktion (81) und eine Schicht eines Oxidationskatalysators (80) aufweist, und wobei der Partikelfilter (23) mit porösen Trennwänden (72), die diese Abgaseinströmkanäle (71 i) und Abgasausströmkanäle (71o) voneinander trennen, bereitgestellt ist und Abgas, das in die Abgaseinströmkanäle (71 i) strömt, durch die Trennwände (72) hindurchgeht und in die Abgasausströmkanäle (71o) ausströmt und wobei auf Oberflächen der Trennwände (72) auf Seiten der Abgaseinströmkanäle (71 i) die Schicht des Oxidationskatalysators (80) auf der stromabwärts liegenden Seite in der Strömungsrichtung des Abgases von den Abgaseinströmkanälen (71 i) durch die Trennwände (72) zu den Abgasausströmkanälen (71o) angeordnet ist und die Schicht des Katalysators zur selektiven NOₓ-Reduktion (81) auf der stromaufwärts liegenden Seite angeordnet ist,
**dadurch gekennzeichnet, dass**
die Schicht des Katalysators zur selektiven NOₓ-Reduktion (81) ein Durchgangsverhältnis von partikulärem Material aufweist, das höher ist als ein vorbestimmtes erstes Durchgangsverhältnis (RPA), dass die Schicht des Oxidationskatalysators (80) ein Durchgangsverhältnis von partikulärem Material aufweist, das geringer ist als das erste Durchgangsverhältnis (RPA).

2. Abgasreinigungssystem für eine Brennkraftmaschine nach Anspruch 1, wobei das Durchgangsverhältnis von partikulärem Material der Schicht des Oxidationskatalysators (80) im Wesentlichen dasselbe wie ein Durchgangsverhältnis von partikulärem Material der Trennwände (72) ist.

3. Abgasreinigungssystem für eine Brennkraftmaschine nach Anspruch 1 oder 2, wobei das Durchgangsverhältnis von partikulärem Material der Schicht des Katalysators zur selektiven NOₓ-Reduktion (81) höher ist als ein zweites Durchgangsverhältnis (RPS), das höher ist als das erste Durchgangsverhältnis (RPA).

4. Abgasreinigungssystem für eine Brennkraftmaschine nach einem der Ansprüche 1 bis 3, wobei das Abgasreinigungssystem mit einem Zugabeventil (24), das ein Reduktionsmittel oder eine Reduktionsmittel erzeugende Substanz dem Partikelfilter (23) zuführt, bereitgestellt ist und der Katalysator zur selektiven NOₓ-Reduktion (81) das Reduktionsmittel verwendet, das von dem Zugabeventil (24) zugeführt wird, um NOₓ zu reduzieren, oder ein Reduktionsmittel aus der Reduktionsmittel erzeugenden Substanz erzeugt, die von dem Zugabeventil (24) zugeführt wird, und NOₓ mittels des Reduktionsmittels reduziert.

5. Abgasreinigungssystem für eine Brennkraftmaschine nach Anspruch 4, wobei die Reduktionsmittel erzeugende Substanz eine Ammoniak erzeugende Verbindung umfasst und wobei der Katalysator zur selektiven NOₓ-Reduktion (81) einen Katalysator umfasst, der NOₓ im Abgas mittels Ammoniak in einem Überschuss an Sauerstoff reduziert und der die Funktion aufweist, zumindest einen Teil der Ammoniak erzeugenden Verbindung, die dem Katalysator zugeführt wird, im Inneren des Katalysators zu speichern und aus der Ammoniak erzeugenden Verbindung, die in dem Katalysator gespeichert ist, Ammoniak zu erzeugen, um mittels des Ammoniaks NOₓ im Abgas zu reduzieren.

6. Abgasreinigungssystem für eine Brennkraftmaschine nach einem der Ansprüche 1 bis 5, wobei der Partikelfilter (23) ferner eine Schicht eines anderen Katalysators zur selektiven NOₓ-Reduktion (82) aufweist, die verschieden ist von der Schicht des Katalysator zur selektiven NOₓ-Reduktion (81), wobei die Schicht des anderen Katalysators zur selektiven NOₓ-Reduktion (82) auf einer stromabwärts liegenden Seite der Schicht des Oxidationskatalysators (81) angeordnet ist, und wobei ein NOₓ-Reduktionsfenster (WR2) des anderen Katalysators zur selektiven NOₓ-Reduktion (82) auf einer Niedertemperaturseite eines NOₓ-Reduktionsfensters (WR1) des Katalysators zur selektiven NOₓ-Reduktion (81) angeordnet ist und auf einer Niedertemperaturseite eines Reduktionsmitteloxidationsfensters (WOX) des Oxidationskatalysators (80) angeordnet ist.

7. Abgasreinigungssystem für eine Brennkraftmaschine nach Anspruch 6, wobei die Schicht des anderen Katalysators zur selektiven NOₓ-Reduktion (82) zwischen der Schicht des Oxidationskatalysators (80) und den Oberflächen (72i) der Trennwände (72) auf den Seiten der Abgaseinströmkanäle (71 i) angeordnet ist.

8. Abgasreinigungssystem einer Brennkraftmaschine nach Anspruch 7, wobei ein Durchgangsverhältnis von partikulärem Material der Schicht des anderen Katalysators zur selektiven NOₓ-Reduktion (82) geringer ist als das erste Durchgangsverhältnis (RPA).

9. Abgasreinigungssystem für eine Brennkraftmaschine nach Anspruch 8, wobei ein Mikroporendurchmesser der Schicht des anderen Katalysators zur selektiven NOₓ-Reduktion (82) 20 µm oder weniger beträgt.

10. Abgasreinigungssystem für eine Brennkraftmaschine nach einem der Ansprüche 1 bis 9, wobei ein Mikroporendurchmesser der Schicht des Katalysators zur selektiven NOₓ-Reduktion (81) 40 µm oder mehr beträgt.

11. Abgasreinigungssystem einer Brennkraftmaschine nach einem der Ansprüche 1 bis 10, wobei ein Mikroporendurchmesser der Schicht des Oxidationskatalysators (80) 20 µm oder weniger beträgt.

## Revendications

1. Système de purification d'échappement pour un moteur à combustion interne, dans lequel un filtre à particules (23) pour piéger de la matière particulaire qui est contenue dans des gaz d'échappement est disposé à l'intérieur d'un passage d'échappement de moteur (21), ledit filtre à particules (23) étant muni de passages d'entrée de gaz d'échappement (71i) et de passages de sortie de gaz d'échappement (71o) disposés de manière alternée,
dans lequel ledit filtre à particules (23) possède de plus une couche d'un catalyseur de réduction sélective de NOₓ (81) et une couche d'un catalyseur d'oxydation (80),
et dans lequel ledit filtre à particules (23) est muni de parois de partition poreuses (72) qui séparent ces passages d'entrée de gaz d'échappement (71i) et passages de sortie de gaz d'échappement (71o) les uns des autres, et des gaz d'échappement qui s'écoulent dans lesdits passages d'entrée de gaz d'échappement (71i) passant à travers lesdites parois de partition (72) et s'écoulant à l'extérieur dans lesdits passages de sortie de gaz d'échappement (71i), et dans lesquels sur des surfaces desdites parois de partition (72) sur des côtés desdits passages d'entrée de gaz d'échappement (71i), ladite couche du catalyseur d'oxydation (80) est disposée sur le côté aval dans la direction d'écoulement de gaz d'échappement à partir desdits passages d'entrée de gaz d'échappement (71i) à travers lesdites parois de partition (72) vers lesdits passages de sortie de gaz d'échappement (71i) et ladite couche de catalyseur de réduction sélective de NOₓ (81) est disposée sur le côté amont, **caractérisé**
**en ce que** la couche de catalyseur de réduction sélective de NOₓ (81) présente un rapport de passage de matière particulaire supérieur à un premier rapport de passage (RPA) prédéterminé,
**en ce que** la couche de catalyseur d'oxydation (80) présente un rapport de passage de matière particulaire inférieur audit premier rapport de passage (RPA).

2. Système de purification de gaz d'échappement pour un moteur à combustion interne selon la revendication 1, dans lequel ledit rapport de passage de matière particulaire de ladite couche du catalyseur d'oxydation (80) est sensiblement identique à un rapport de passage de matière particulaire desdites parois de partition (72).

3. Système de purification d'échappement pour un moteur à combustion interne selon la revendication 1 ou 2, dans lequel ledit rapport de passage de matière particulaire de ladite couche du catalyseur de réduction sélective de NOₓ (81) est supérieur à un second rapport de passage (RPS) qui est supérieur audit premier rapport de passage (RPA).

4. Système de purification d'échappement pour un moteur à combustion interne selon l'une quelconque des revendications 1 à 3, dans lequel ledit système de purification d'échappement est muni d'une vanne d'addition (24) qui introduit un agent réducteur ou un substance générant un agent réducteur dans ledit filtre à particules (23), et ledit catalyseur de réduction sélective de NOₓ (81) utilise ledit agent réducteur qui est introduit à partir de ladite vanne d'addition (24) pour réduire NOₓ ou produire un agent réducteur à partir de ladite substance générant un agent réducteur qui est introduite à partir de ladite vanne d'addition (24) et qui réduit NOₓ par ledit agent réducteur.

5. Système de purification d'échappement pour un moteur à combustion interne selon la revendication 4, dans lequel ladite substance générant un agent réducteur comporte un composé générant de l'ammoniac et dans lequel ledit catalyseur de réduction sélective de NOₓ (81) comporte un catalyseur qui réduit NOₓ dans des gaz d'échappement par de l'ammoniac dans un excès d'oxygène et qui présente la fonction de stockage d'au moins une partie du composé générant de l'ammoniac qui est introduit dans ledit catalyseur à l'intérieur dudit catalyseur et générant de l'ammoniac à partir du composé générant de l'ammoniac qui est stocké dans ledit catalyseur pour réduire NOₓ dans les gaz d'échappement par ledit ammoniac.

6. Système de purification d'échappement pour un moteur à combustion interne selon l'une quelconque des revendications 1 à 5, dans lequel ledit filtre à particules (23) possède de plus une couche d'un autre catalyseur de réduction sélective de NOₓ (82) qui est différente de ladite couche du catalyseur de réduction sélective de NOₓ (81), dans lequel ladite couche de l'autre catalyseur de réduction sélective de NOₓ (82) est disposée sur un côté aval de ladite couche du catalyseur d'oxydation (81), et dans lequel une fenêtre de réduction de NOₓ (WR2) dudit autre catalyseur de réduction sélective de NOₓ (82) est disposée sur un côté de faible température d'une fenêtre de réduction de NOₓ (WR1) dudit catalyseur de réduction sélective de NOₓ (81) et est disposée sur un côté de faible température d'une fenêtre d'oxydation d'agent réducteur (WOX) dudit catalyseur d'oxydation (80).

7. Système de purification d'échappement pour un moteur à combustion interne selon la revendication 6, dans lequel ladite couche de l'autre catalyseur de réduction sélective de NOₓ (82) est disposée entre ladite couche du catalyseur d'oxydation (80) et les surfaces (72i) desdites parois de partition (72) sur les côtés desdits passages d'entrée de gaz d'échappement (71i).

8. Système de purification d'échappement d'un moteur à combustion interne selon la revendication 7, dans lequel un rapport de passage de matière particulaire de ladite couche de l'autre catalyseur de réduction sélective de NOₓ (82) est inférieur audit premier rapport de passage (RPA).

9. Système de purification d'échappement pour un moteur à combustion interne selon la revendication 8, dans lequel un diamètre de micropore de ladite couche de l'autre catalyseur de réduction sélective de NOₓ (82) est de 20 µm ou inférieur.

10. Système de purification d'échappement pour un moteur à combustion interne selon l'une quelconque des revendications 1 à 9, dans lequel un diamètre de micropore de ladite couche du catalyseur de réduction sélective de NOₓ (81) est de 40 µm ou supérieur.

11. Système de purification d'échappement d'un moteur à combustion interne selon l'une quelconque des revendications 1 à 10, dans lequel un diamètre de micropore de ladite couche du catalyseur d'oxydation (80) est de 20 µm ou inférieur.
